# EUROPÄISCHE PATENTANMELDUNG

(11) **EP 2 738 436 A1**
(43) Veröffentlichungstag der Anmeldung: **04.06.2014**
(21) Anmeldenummer: 12194671.9
(22) Anmeldetag: 28.11.2012
(51) Int. Cl.: F16L 33/24, F16L 37/098

(54) **Kraftfahrzeugaggregat und Verfahren zur Herstellung eines Kraftfahrzeugaggregates**

(71) Anmelder: TI Automotive (Fuldabrück) GmbH, 34277 Fuldabrück (DE)
(72) Erfinder: Jensen, Hans, 73265 Dettingen unter Teck (DE); Bol, Alexander, 34225 Baunatal, Guntershausen (DE); Barthel, Iris, 34270 Schauenburg (DE)
(74) Vertreter: Rohmann, Michael

(57) **Zusammenfassung**

Kraftfahrzeugaggregat mit einem Verbinder (1) und mit einer Kraftfahrzeugrohrleitung (2), wobei der Verbinder ein Einschubende (3) zum Einschieben der Rohrleitung aufweist sowie einen an das Einschubende angeschlossenen Mittelabschnitt (7). An dem Einschubabschnitt ist ein Haltedorn (4) vorhanden, der von einer Außenhülse (5) umgeben ist. Zwischen Haltedorn und Außenhülse ist ein Einschubringraum (6) für die Rohrleitung angeordnet. In dem Einschubringraum ist zumindest ein Gewinde (13) vorhanden und die Gewindespitzen (14) des Gewindes liegen nach dem Einschieben der Rohrleitung in dem Einschubringraum kraftschlüssig bzw. reibschlüssig an der Rohrleitung an.

## Beschreibung

Die Erfindung betrifft ein Kraftfahrzeugaggregat aus einem Verbinder - insbesondere Schnellverbinder - und einer Kraftfahrzeugrohrleitung. Weiterhin betrifft die Erfindung ein Verfahren zur Herstellung eines Kraftffahrzeugaggregates aus einem Verbinder - insbesondere Schnellverbinder - und einer Kraftfahrzeugrohrleitung. Kraftfahrzeugrohrleitung meint eine Rohrleitung in einem Kraftfahrzeug, insbesondere für Kraftstoffe, für Bremsflüssigkeiten oder beispielsweise für eine Harnstofflösung für ein Katalysatorsystem des Kraftfahrzeuges.

Aus der Praxis sind Kraftfahrzeugaggregate der vorstehend beschriebenen Art und Verfahren zur Herstellung von Kraftfahrzeugaggregaten der eingangs genannten Art in verschiedenen Ausführungsformen bekannt. Es ist bereits bekannt, Kraftfahrzeugrohrleitungen aus Kunststoff - beispielsweise aus Polyamid 12 - mit einem Verbinder zu verbinden, indem die Kraftfahrzeugrohrleitung kraftschlüssig bzw. reibschlüssig in einen Eingriffsabschnitt des Verbinders eingreift. Viele der bekannten Kraftfahrzeugaggregate weisen aber den Nachteil auf, dass die Rohrleitung bei höheren Drücken und/oder bei höheren Temperaturen nicht mehr ausreichend funktionssicher an dem Verbinder fixiert ist. Die Verwendung von Schlauchklemmen oder dergleichen zur Verbesserung der Fixierung ist aufwändig bzw. kostenaufwändig und bringt geometrische Einschränkungen mit sich. Viele bekannte Kraftfahrzeugaggregate weisen weiterhin den Nachteil auf, dass die mit dem Verbinder verbundenen Rohrleitungsenden verhältnismäßig ungeschützt gegenüber fluiden Medien, insbesondere korrosiven fluiden Medien, beispielsweise gegenüber Spritzwasser sind.

Demgegenüber liegt der Erfindung das technische Problem zugrunde, ein Kraftfahrzeugaggregat der eingangs genannten Art anzugeben, bei dem die vorstehend beschriebenen Nachteile wirksam vermieden werden können. Weiterhin liegt der Erfindung das technische Problem zugrunde, ein Verfahren zur Herstellung eines Kraftfahrzeugaggregates anzugeben.

Zur Lösung des technischen Problems lehrt die Erfindung ein Kraftfahrzeugaggregat mit einem Verbinder - insbesondere Schnellverbinder - und mit einer Kraftfahrzeugrohrleitung, wobei der Verbinder ein Einschubende zum Einschieben der Rohrleitung aufweist sowie vorzugsweise einen an das Einschubende angeschlossenen Mittelabschnitt, wobei an dem Einschubende ein Haltedorn vorhanden ist, der von einer Außenhülse umgeben ist, wobei zwischen Haltedorn und Außenhülse ein Einschubringraum für die Rohrleitung bzw. für ein Rohrleitungsende der Rohrleitung angeordnet ist, wobei in dem Einschubringraum zumindest ein Gewinde vorhanden ist und wobei die Gewindespitzen des Gewindes nach dem Einschieben bzw. nach dem vollständigen Einschieben der Rohrleitung in den Einschubringraum kraftschlüssig bzw. reibschlüssig an der Rohrleitung bzw. an dem Rohrleitungsende anliegen und/oder formschlüssig in die Rohrleitung bzw. in das Rohrleitungsende eingreifen. Zwischen den Gewindespitzen des Gewindes liegen in üblicher Weise Gewindetäler. Es liegt im Rahmen der Erfindung, dass die Rohrleitung bzw. das Rohrleitungsende mit Hilfe der Gewindespitzen des Gewindes zwischen Außenhülse und Haltedorn in dem Einschubringraum eingeklemmt wird.

Anstelle des Begriffes Kraftfahrzeugrohrleitung wird hier und nachfolgend auch der verkürzte Begriff Rohrleitung verwendet. Rohrleitung meint im Übrigen im Rahmen der Erfindung auch einen an den Verbinder bzw. Schnellverbinder anzuschließenden Schlauch. - Dass die Rohrleitung bzw. das Rohrleitungsende in den Einschubringraum eingeschoben wird, meint im Rahmen der Erfindung auch, dass die Rohrleitung bzw. das Rohrleitungsende in den Einschubringraum eingedreht bzw. eingeschraubt wird. Das wird weiter unten noch näher erläutert. Es liegt im Übrigen im Rahmen der Erfindung, dass die Rohrleitung einen kreisförmigen Querschnitt bzw. einen im Wesentlichen kreisförmigen Querschnitt aufweist.

Zweckmäßigerweise ist der Haltedorn zylinderförmig bzw. im Wesentlichen zylinderförmig ausgeführt. Es liegt im Rahmen der Erfindung, dass der Haltedorn innen hohl zur Durchleitung des fluiden Mediums ausgebildet ist. Empfohlenermaßen ist die Außenhülse zylinderförmig bzw. im Wesentlichen zylinderförmig ausgeführt. Vorzugsweise handelt es sich bei dem Einschubringraum um einen zylinderförmigen bzw. im Wesentlichen zylinderförmigen Einschubringraum. Zweckmäßigerweise besteht der Verbinder bzw. Schnellverbinder aus Kunststoff bzw. im Wesentlichen aus Kunststoff.

Nach besonders bevorzugter Ausführungsform der Erfindung ist der erfindungsgemäße Verbinder ein Schnellverbinder. Es empfiehlt sich, dass der Verbinder bzw. Schnellverbinder einen mit dem Mittelabschnitt verbundenen Anschlussabschnitt aufweist, der mit einer Steckelementaufnahmeöffnung zur Aufnahme eines Steckelementes ausgestattet ist. Vorzugsweise weist die Steckelementaufnahmeöffnung zumindest einen Rastvorsprung bzw. Rastvorsprünge auf, welcher Rastvorsprung bzw. welche Rastvorsprünge von zumindest einem Vorsprungelement an der Außenoberfläche des Steckelementes hintergreifbar ist/sind. Zweckmäßigerweise ist das Vorsprungelement an dem Steckelement in Form einer ringförmigen Stauchung bzw. in Form eines ringförmigen Vorsprunges ausgebildet. Im angeschlossenen Zustand hintergreift dann diese Stauchung bzw. dieser Vorsprung einen Rastvorsprung bzw. Rastvorsprünge in der Steckelementaufnahmeöffnung des Verbinders bzw. Schnellverbinders. Bei dem Steckelement handelt es sich insbesondere um ein Anschlusselement für eine weitere Rohrleitung. Grundsätzlich könnte aber auch ein anderes Aggregat an den Verbinder angeschlossen werden, beispielsweise ein Tank für ein fluides Medium oder dergleichen.

Eine empfohlene Ausführungsform der Erfindung ist dadurch gekennzeichnet, dass das Gewinde an der haltedornseitigen Innenwandung der Außenhülse angeordnet ist. Dann bildet das Gewinde also ein Innengewinde der Außenhülse. Es liegt im Rahmen der Erfindung, dass das Gewinde bzw. das Innengewinde einstückig an die Außenhülse angeformt ist. - Eine weitere empfohlene Ausführungsform der Erfindung zeichnet sich dadurch aus, dass das Gewinde an der rohrleitungsseitigen Außenoberfläche des Haltedorns angeordnet ist. In diesem Fall bildet das Gewinde also ein Außengewinde des Haltedorns. Es liegt im Rahmen der Erfindung, dass das Gewinde bzw. das Innengewinde einstückig an den Haltedorn angeformt ist.

Zweckmäßigerweise bestehen die Außenhülse und/oder der Haltedorn und das daran angeformte Gewinde aus Kunststoff. Es empfiehlt sich, dass sich das Gewinde über zumindest 50 %, vorzugsweise über zumindest 60 %, bevorzugt über zumindest 70 % und besonders bevorzugt über zumindest 80 % der Länge I des Einschubringraumes erstreckt. Zweckmäßigerweise erstreckt sich das Gewinde über die gesamte Länge I bzw. im Wesentlichen über die gesamte Länge I des Einschubringraumes.

Es liegt im Rahmen der Erfindung, dass die Gewindespitzen des Gewindes nach dem Einschieben der Rohrleitung in den Einschubringraum kraftschlüssig bzw. reibschlüssig an dem Rohrleitungsende anliegen und/oder formschlüssig in das Rohrleitungsende eingreifen. Bei dem Eingreifen der Gewindespitzen wird die Wandung der Rohrleitung durch die Gewindespitzen gleichsam zurückgedrückt, so dass sich Eingriffsnuten in der Wandung der Rohrleitung bilden. Das Einschieben des Rohrleitungsendes findet bei dieser Ausführungsform bevorzugt zumindest teilweise als Eindrehen bzw. Einschrauben des Rohrleitungsendes statt. Es liegt im Rahmen der Erfindung, dass die Gewindespitzen nach dem Einschieben bzw. Einschrauben des Rohrleitungsendes formschlüssig in die Wandung des Rohrleitungsendes eingreifen und bevorzugt auch kraftschlüssig bzw. reibschlüssig an der Wandung des Rohrleitungsendes anliegen.

Eine weitere Ausführungsform der Erfindung ist dadurch gekennzeichnet, dass die Gewindespitzen des Gewindes beim Einschieben der Rohrleitung bzw. des Rohrleitungsendes in den Einschubringraum in die Rohrleitungswandung einschneiden. Dann findet das Einschieben des Rohrleitungsendes vorzugsweise zumindest teilweise als Eindrehen bzw. Einschrauben des Rohrleitungsendes statt. Es liegt dabei im Rahmen der Erfindung, dass mittels der Gewindespitzen Einschnittnuten in die Rohrleitungswandung eingeschnitten werden. Es liegt weiterhin im Rahmen der Erfindung, dass die Gewindespitzen nach dem Einschieben bzw. Einschrauben des Rohrleitungsendes formschlüssig in die Wandung des Rohrleitungsendes eingreifen und bevorzugt auch kraftschlüssig bzw. reibschlüssig an der Wandung des Rohrleitungsendes anliegen.

Es liegt im Rahmen der Erfindung, dass die Rohrleitung bzw. das Rohrleitungsende nach dem Einschieben in den Einschubringraum bzw. im eingeschobenen Zustand formschlüssig und bevorzugt kraftschlüssig bzw. reibschlüssig auf dem Haltedorn des Verbinders aufsitzt. Zweckmäßigerweise wird das Rohrleitungsende im eingeschobenen Zustand bzw. im vollständig eingeschobenen Zustand zwischen der Außenhülse bzw. zwischen dem Gewinde der Außenhülse und dem Haltedorn eingeklemmt. Vorzugsweise liegt die Rohrleitung bzw. liegt das Rohrleitungsende nach dem Einschieben bzw. nach dem vollständigen Einschieben in den Einschubringraum mit ihrem bzw. mit seinem Stirnende an einem Anschlagflansch des Einschubendes an. - Zweckmäßigerweise sind die Außenhülse und der Haltedorn einstückig miteinander verbunden und zwar bevorzugt über den Anschlagflansch einstückig miteinander verbunden. Zweckmäßigerweise ist das gesamte Einschubende des Verbinders ein einstückiges Kunststoffteil, insbesondere Spritzgussteil.

Es liegt im Rahmen der Erfindung, dass zumindest ein Basisteil des Verbinders - insbesondere mit dem Einschubende und dem Mittelabschnitt und bevorzugt auch mit dem Anschlussabschnitt - als ein einziges Kunststoffteil, insbesondere als ein einziges Spritzgussteil ausgebildet ist.

Eine empfohlene Ausführungsform der Erfindung zeichnet sich dadurch aus, dass der Haltedorn ein sich konisch verjüngendes Stirnende aufweist, wobei dieses konisch verjüngende Stirnende zweckmäßigerweise als Aufschiebehilfe für die Rohrleitung bzw. für das Rohrleitungsende dient. Zweckmäßigerweise ragt der Haltedorn mit einem Stirnende aus der Außenhülse heraus. Vorzugsweise handelt es sich dabei um das vorgenannte sich konisch verjüngende Stirnende des Haltedorns.

Gegenstand der Erfindung ist auch ein Verfahren zur Herstellung eines Kraftfahrzeugaggregates aus einem Verbinder - insbesondere aus einem Schnellverbinder - und einer Kraftfahrzeugrohrleitung, wobei ein Basisteil des Verbinders mit einem Haltedorn an einem Einschubende und mit einer den Haltedorn umgebenden Außenhülse sowie einem in einem Einschubringraum zwischen Haltedorn und Außenhülse angeordneten Gewinde hergestellt wird und wobei ein Rohrleitungsende der Rohrleitung in den Einschubringraum eingeschoben bzw. eingeschraubt wird. Vorzugsweise weist das Basisteil einen an das Einschubende angeschlossenen Mittelabschnitt sowie einen mit dem Mittelabschnitt verbundenen Anschlussabschnitt auf. Nach besonders bevorzugter Ausführungsform der Erfindung wird das Basisteil mit einem Spritzgussverfahren und bevorzugt als ein einziges Kunststoffteil hergestellt.

Der Erfindung liegt die Erkenntnis zugrunde, dass bei dem erfindungsgemäßen Kraftfahrzeugaggregat eine überraschend funktionssichere und effektive Fixierung der Kraftfahrzeugrohrleitung an dem Verbinder bzw. Schnellverbinder möglich ist. Diese Verbindung ist auch resistent gegenüber höheren Drücken und/oder höheren Temperaturen. Das erfindungsgemäße Kraftfahrzeugaggregat lässt sich auf einfache, wenig aufwändige und insbesondere auch wenig kostenaufwändige Weise realisieren. Die Erfindung weist fernerhin den Vorteil auf, dass Partikel, die bei der Herstellung der Verbindung zwischen dem Verbinder und dem Rohrleitungsende entstehen, in dem Zwischenraum zwischen der Außenhülse und dem Haltedorn festgehalten werden und somit das System bzw. das Aggregat nicht verunreinigen. Weiterhin wird das mit dem Verbinder verbundene Rohrleitungsende nicht der Umgebung bzw. nicht Umgebungseinflüssen ausgesetzt und wird vielmehr dicht im Zwischenraum zwischen Außenhülse und Haltedorn aufgenommen. Insoweit wird für das Rohrleitungsende auch ein Spritzwasserschutz gegen Salzwasser oder dergleichen Flüssigkeiten verwirklicht.

Nachfolgend wird die Erfindung anhand einer lediglich ein Ausführungsbeispiel darstellenden Zeichnung näher erläutert. Es zeigen in schematischer Darstellung:
- Fig. 1: ein erfindungsgemäßes Kraftfahrzeugaggregat in einer ersten Funktionsstellung,
- Fig. 2: den Gegenstand nach Fig. 1 in einer zweiten Funktionsstellung,
- Fig. 3: den Gegenstand gemäß Fig. 1 in einer dritten Funktionsstellung und
- Fig. 4: den Gegenstand nach Fig. 1 in einer vierten Funktionsstellung bzw. im vollständig eingeschobenen Zustand der Rohrleitung.

In den Figuren ist ein erfindungsgemäßes Kraftfahrzeugaggregat aus einem Schnellverbinder 1 und einer Kraftfahrzeugrohrleitung 2 dargestellt. Der Schnellverbinder 1 weist ein Einschubende 3 zum Einschieben der Rohrleitung 2 auf. An das Einschubende 3 des Verbinders 1 ist ein Mittelabschnitt 7 angeschlossen und an diesen Mittelabschnitt 7 ist wiederum ein Anschlussabschnitt 8 des Verbinders angeschlossen. Der Anschlussabschnitt 8 ist mit einer Steckelementaufnahmeöffnung 9 zur Aufnahme eines Steckelementes 10 ausgestattet. Die Steckelementaufnahmeöffnung 9 weist bevorzugt und im Ausführungsbeispiel Rastvorsprünge 11 auf, wobei die Rastvorsprünge 11 von einem in Form einer ringförmigen Stauchung ausgebildeten Vorsprungelement 12 an der Außenoberfläche des Steckelementes 10 hintergreifbar sind.

An dem Einschubende 3 des Schnellverbinders 1 ist ein Haltedorn 4 vorhanden, der von einer Außenhülse 5 umgeben ist. Zwischen dem Haltedorn 4 und der Außenhülse 5 ist ein Einschubringraum 6 zum Einschieben bzw. zum Einschrauben der Rohrleitung 2 bzw. des Rohrleitungsendes der Rohrleitung 2 angeordnet. Fernerhin ist in dem Einschubringraum 6 ein Gewinde 13 vorhanden, das im Ausführungsbeispiel an der haltedornseitigen Innenwandung der Außenhülse 5 angeordnet ist. Das Gewinde 13 bildet also vorzugsweise und im Ausführungsbeispiel ein Innengewinde der Außenhülse 5. Bevorzugt ist das Gewinde 13 einstückig an die Außenhülse 5 angeformt. Zweckmäßigerweise und im Ausführungsbeispiel erstreckt sich das Gewinde 13 über die gesamte Länge I des Einschubringraumes 6.

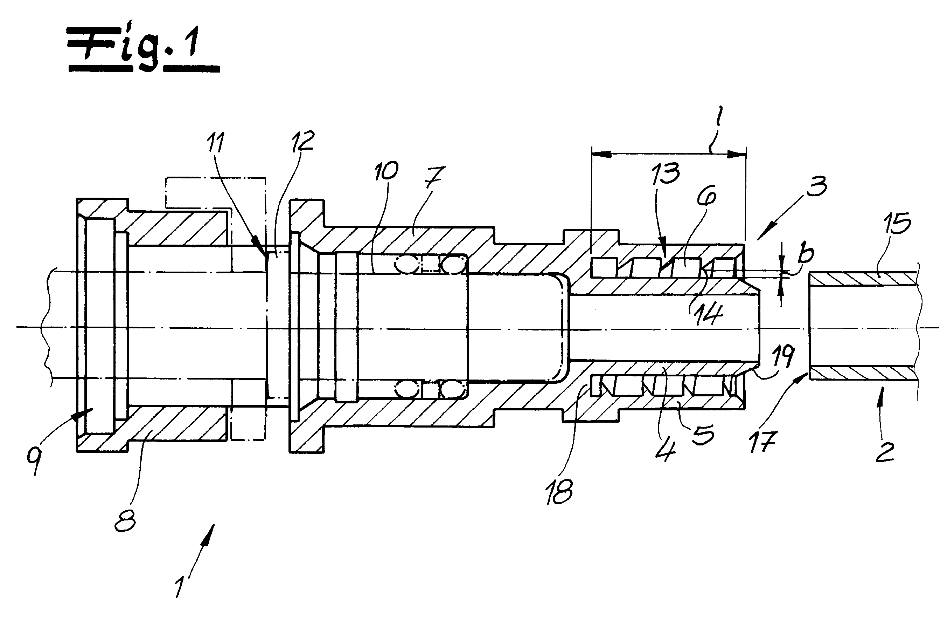

In der Fig. 1 ist der Schnellverbinder 1 mit noch nicht eingeschobener Rohrleitung 2 dargestellt. Die Außenhülse 5 ist zweckmäßigerweise und im Ausführungsbespiel zylinderförmig ausgebildet und läuft bevorzugt und im Ausführungsbeispiel über den Außenumfang des Schnellverbinders 1 bzw. des Haltedornes 4 um. Empfohlenermaßen und im Ausführungsbeispiel ist auch der Haltedorn 4 zylinderförmig bzw. im Wesentlichen zylinderförmig ausgebildet. Die Breite b des Einschubringraumes 6 zwischen den Gewindespitzen 14 des Gewindes 13 und der Außenoberfläche des Haltedorns 4 ist bevorzugt und im Ausführungsbeispiel geringer bzw. etwas geringer als die Dicke der Wandung 15 der Rohrleitung 2.

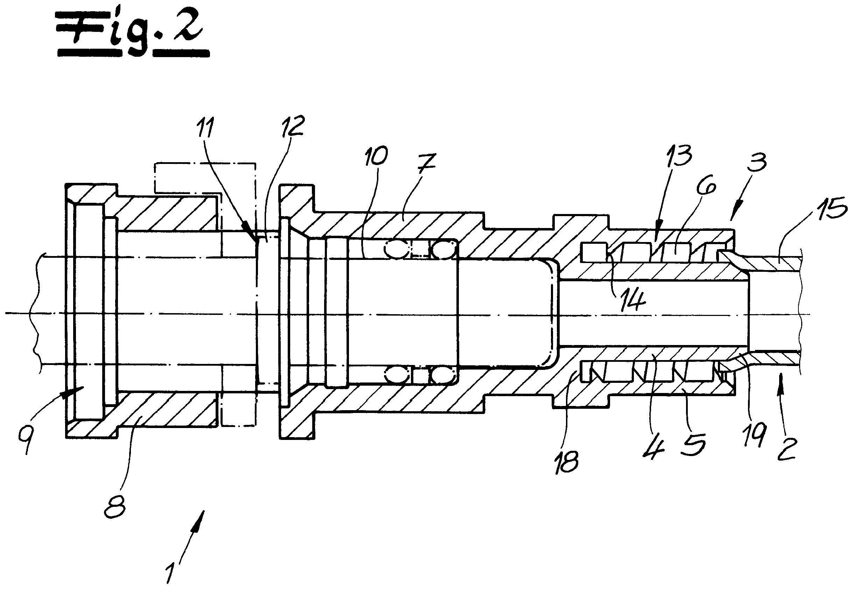

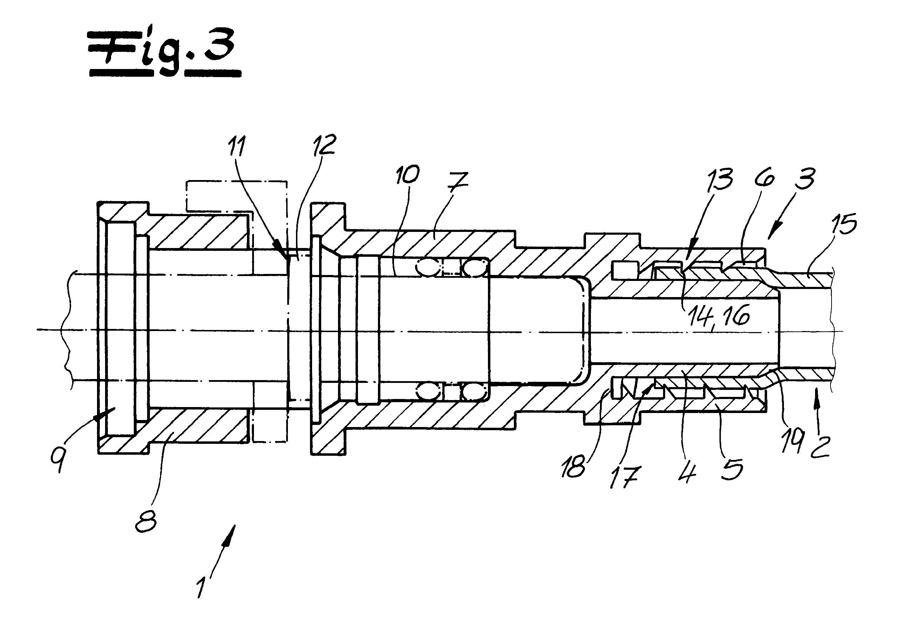

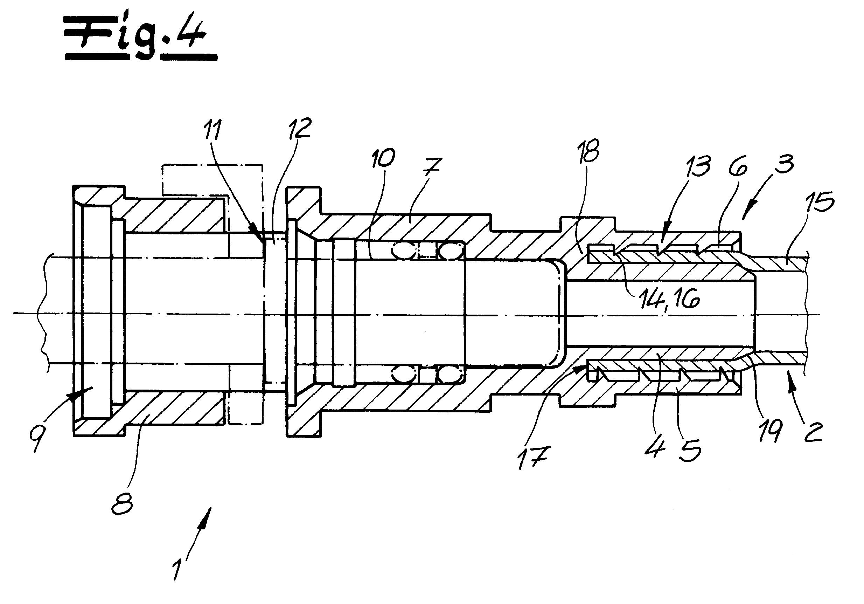

Gemäß einer besonders bevorzugten Ausführungsform der Erfindung und im Ausführungsbeispiel greifen die Gewindespitzen 14 des Gewindes 13 beim Einschieben der Rohrleitung 2 in den Einschubringraum 6 in die Wandung 15 der Rohrleitung 2 ein. Dazu kann insbesondere auf die Fig. 2 und 3 verwiesen werden. Zweckmäßigerweise findet dabei das Einschieben der Rohrleitung 2 in den Einschubringraum 6 zumindest teilweise durch Eindrehen bzw. Einschrauben des Rohrleitungsendes in den Einschubringraum 6 statt. Es liegt im Rahmen der Erfindung, dass beim Eingreifen der Gewindespitzen 14 des Gewindes 13 in die Außenoberfläche der Rohrleitung 2 bzw. des Rohrleitungsendes Eingriffsnuten 16 gebildet werden. Im vollständig eingeschobenen Zustand (Fig. 4) der Rohrleitung 2 liegen bevorzugt und im Ausführungsbeispiel die Gewindespitzen 14 des Gewindes 13 sowohl kraftschlüssig bzw. reibschlüssig an der Außenoberfläche der Rohrleitung 2 an und greifen formschlüssig in die Eingriffsnuten 16 der Rohrleitung 2 ein. Empfohlenermaßen und im Ausführungsbeispiel sitzt fernerhin die Rohrleitung 2 im vollständig eingeschobenen Zustand formschlüssig und bevorzugt kraftschlüssig bzw. reibschlüssig auf dem Haltedorn 4 auf. Zweckmäßigerweise und im Ausführungsbeispiel liegt die Rohrleitung 2 bzw. das Rohrleitungsende im vollständig eingeschobenen Zustand (Fig. 4) mit ihrem bzw. seinem Stirnende 17 an einem Anschlagflansch 18 des Einschubendes 3 an. Der Anschlagflansch 18 läuft vorzugsweise und im Ausführungsbeispiel unterbrechungsfrei über den Umfang des Verbinders 1 um. Empfohlenermaßen und im Ausführungsbeispiel ist die Außenhülse 5 über den Anschlagflansch 18 mit dem Haltedorn 4 einstückig verbunden. - Aufgrund des formschlüssigen Eingreifens der Gewindespitzen 14 in die Eingriffsnuten 16 (Fig. 4) wird das Rohrleitungsende der Rohrleitung 2 effektiv vor nachteilhaften äußeren Einflüssen - wie Spritzwasser oder dergleichen - geschützt.

Bevorzugt und im Ausführungsbeispiel ist das in den Figuren dargestellte Basisteil des Verbinders mit dem Einschubende 3, dem Mittelabschnitt 7 und dem Anschlussabschnitt als ein einziges Kunststoffteil, insbesondere als ein einziges Spritzgussteil ausgebildet. Dieses Basisteil könnte noch von einem separaten Gehäuse umgeben werden oder aber beispielsweise mit Kunststoff umspritzt werden. - Empfohlenermaßen und im Ausführungsbeispiel weist der Haltedorn 4 des Einschubendes 3 ein sich konisch verjüngendes Stirnende 19 als Aufschiebehilfe für die Rohrleitung 2 bzw. für das Rohrleitungsende auf. Bevorzugt und im Ausführungsbeispiel ragt der Haltedorn 4 mit seinem Stirnende 19 aus der Außenhülse 5 heraus. Auch das erleichtert das Einschieben bzw. Aufschieben der Rohrleitung 2.

## Patentansprüche

1. Kraftfahrzeugaggregat mit einem Verbinder (1), insbesondere Schnellverbinder (1) und einer Kraftfahrzeugrohrleitung (2), wobei der Verbinder (1) ein Einschubende (3) zum Einschieben der Rohrleitung (2) aufweist sowie vorzugweise einen an das Einschubende (3) angeschlossenen Mittelabschnitt (7), wobei an dem Einschubende (3) ein Haltedorn (4) vorhanden ist, der von einer Außenhülse (5) umgeben ist, wobei zwischen dem Haltedorn (4) und der Außenhülse (5) ein Einschubringraum (6) für die Rohrleitung (2) bzw. für ein Rohrleitungsende der Rohrleitung (2) angeordnet ist, wobei in dem Einschubringraum (6) zumindest ein Gewinde (13) vorhanden ist und wobei die Gewindespitzen (14) des Gewindes (13) nach dem Einschieben der Rohrleitung (2) in den Einschubringraum (6) kraftschlüssig bzw. reibschlüssig an dem Rohrleitungsende anliegen und/oder formschlüssig in das Rohrleitungsende eingreifen.

2. Kraftfahrzeugaggregat nach Anspruch 1, wobei der Verbinder (1) bzw. Schnellverbinder (1) einen mit dem Mittelabschnitt (7) verbundenen Anschlussabschnitt (8) aufweist, der mit einer Steckelementaufnahmeöffnung (9) zur Aufnahme eines Steckelementes (10) ausgestattet ist.

3. Kraftfahrzeugaggregat nach Anspruch 2, wobei die Steckelementaufnahmeöffnung (9) einen Rastvorsprung (11) bzw. Rastvorsprünge (11) aufweist, welcher Rastvorsprung (11) bzw. welche Rastvorsprünge (11) von zumindest einem Vorsprungelement (12) des Steckelementes (10) hintergreifbar ist/sind.

4. Kraftfahrzeugaggregat nach einem der Ansprüche 1 bis 3, wobei das Gewinde (13) an der haltedornseitigen Innenwandung der Außenhülse (5) angeordnet ist.

5. Kraftfahrzeugaggregat nach einem der Ansprüche 1 bis 4, wobei das Gewinde (13) an der rohrleitungsseitigen Außenwandung des Haltedorns (4) angeordnet ist.

6. Kraftfahrzeugaggregat nach einem der Ansprüche 1 bis 5, wobei sich das Gewinde (13) über zumindest 50 %, vorzugsweise über zumindest 60 % und bevorzugt über zumindest 70 % der Länge I des Einschubringraumes (6) erstreckt.

7. Kraftfahrzeugaggregat nach einem der Ansprüche 1 bis 6, wobei die Gewindespitzen (14) des Gewindes (13) beim bzw. nach dem Einschieben der Rohrleitung (2) in den Einschubringraum (6) in in der Wandung (15) der Rohrleitung (2) gebildete Eingriffsnuten (16) eingreifen.

8. Kraftfahrzeugaggregat nach einem der Ansprüche 1 bis 7, wobei die Rohrleitung (2) bzw. das Rohrleitungsende nach dem Einschieben in den Einschubringraum (6) bzw. im eingeschobenen Zustand formschlüssig und bevorzugt kraftschlüssig bzw. reibschlüssig auf dem Haltedorn (4) des Verbinders (1) aufsitzt.

9. Kraftfahrzeugaggregat nach einem der Ansprüche 1 bis 8, wobei die Rohrleitung (2) bzw. das Rohrleitungsende nach dem Einschieben bzw. nach dem vollständigen Einschieben in den Einschubringraum (6) mit ihrem bzw. seinem Stirnende (17) an einem Anschlagflansch (18) des Einschubendes (3) anliegt.

10. Kraftfahrzeugaggregat nach einem der Ansprüche 1 bis 9, wobei die Außenhülse (5) und der Haltedorn (4) einstückig miteinander verbunden sind.

11. Kraftfahrzeugaggregat nach einem der Ansprüche 1 bis 10, wobei zumindest ein Basisteil des Verbinders (1) - insbesondere mit dem Einschubende (3) und dem Mittelabschnitt (7) und bevorzugt auch mit dem Anschlussabschnitt (8) - als ein einziges Kunststoffteil und insbesondere als ein einziges Spritzgussteil ausgebildet ist.

12. Kraftfahrzeugaggregat nach einem der Ansprüche 1 bis 11, wobei der Haltedorn (4) ein sich konisch verjüngendes Stirnende (19) als Aufschiebehilfe für die Rohrleitung (2) bzw. für das Rohrleitungsende aufweist.

13. Kraftfahrzeugaggregat nach einem der Ansprüche 1 bis 12, wobei der Haltedorn (4) mit seinem Stirnende (17) aus der Außenhülse (5) herausragt.

14. Verfahren zur Herstellung eines Kraftfahrzeugaggregates mit einem Verbinder (19) - insbesondere Schnellverbinder - und einer Kraftfahrzeugrohrleitung (2) insbesondere nach einem der Ansprüche 1 bis 13, wobei ein Basisteil des Verbinders (1) mit einem Haltedorn (4) an einem Einschubende (3) und mit einer den Haltedorn (4) umgebenden Außenhülse (5) sowie einem in einem Einschubringraum (6) zwischen Haltedorn (4) und Außenhülse (5) angeordneten Gewinde (13) hergestellt wird und wobei ein Rohrleitungsende der Rohrleitung (2) in den Einschubringraum (6) eingeschoben bzw. eingeschraubt wird.

15. Verfahren nach Anspruch 14, wobei das Basisteil mit einem Spritzgussverfahren hergestellt wird.

## Geänderte Patentansprüche

### Geänderte Patentansprüche gemäss Regel 137(2) EPÜ.

**1.** Kraftfahrzeugaggregat mit einem Schnellverbinder (1) und einer Kraftfahrzeugrohrleitung (2), wobei der Verbinder (1) ein Einschubende (3) zum Einschieben der Rohrleitung (2) aufweist sowie einen an das Einschubende (3) angeschlossenen Mittelabschnitt (7), wobei an dem Einschubende (3) ein Haltedorn (4) vorhanden ist, der von einer Außenhülse (5) umgeben ist, wobei zwischen dem Haltedorn (4) und der Außenhülse (5) ein Einschubringraum (6) für die Rohrleitung (2) bzw. für ein Rohrleitungsende der Rohrleitung (2) angeordnet ist, wobei in dem Einschubringraum (6) zumindest ein Gewinde (13) vorhanden ist und wobei die Gewindespitzen (14) des Gewindes (13) nach dem Einschieben der Rohrleitung (2) in den Einschubringraum (6) kraftschlüssig bzw. reibschlüssig an dem Rohrleitungsende anliegen und/oder formschlüssig in das Rohrleitungsende eingreifen,
wobei der Schnellverbinder (1) einen mit dem Mittelabschnitt (7) verbundenen Anschlussabschnitt (8) aufweist, **dadurch gekennzeichnet, dass** der Anschlussabschnitt (8) mit einer Steckelementaufnahmeöffnung (9) zur Aufnahme eines Steckelementes (10) ausgestattet ist,
wobei die Steckelementaufnahmeöffnung (9) einen Rastvorsprung (11) bzw. Rastvorsprünge (11) aufweist, welcher Rastvorsprung (11) bzw. welche Rastvorsprünge (11) von zumindest einem Vorsprungelement (12) des Steckelementes (10) hintergreifbar ist/sind.

**2.** Kraftfahrzeugaggregat nach Anspruch 1, wobei das Gewinde (13) an der haltedornseitigen Innenwandung der Außenhülse (5) angeordnet ist.

**3.** Kraftfahrzeugaggregat nach Anspruch 1 oder 2, wobei das Gewinde (13) an der rohrleitungsseitigen Außenwandung des Haltedorns (4) angeordnet ist.

**4.** Kraftfahrzeugaggregat nach einem der Ansprüche 1 bis 3, wobei sich das Gewinde (13) über zumindest 50 %, vorzugsweise über zumindest 60 % und bevorzugt über zumindest 70 % der Länge I des Einschubringraumes (6) erstreckt.

**5.** Kraftfahrzeugaggregat nach einem der Ansprüche 1 bis 4, wobei die Gewindespitzen (14) des Gewindes (13) beim bzw. nach dem Einschieben der Rohrleitung (2) in den Einschubringraum (6) in in der Wandung (15) der Rohrleitung (2) gebildete Eingriffsnuten (16) eingreifen.

**6.** Kraftfahrzeugaggregat nach einem der Ansprüche 1 bis 5, wobei die Rohrleitung (2) bzw. das Rohrleitungsende nach dem Einschieben in den Einschubringraum (6) bzw. im eingeschobenen Zustand formschlüssig und bevorzugt kraftschlüssig bzw. reibschlüssig auf dem Haltedorn (4) des Verbinders (1) aufsitzt.

**7.** Kraftfahrzeugaggregat nach einem der Ansprüche 1 bis 6, wobei die Rohrleitung (2) bzw. das Rohrleitungsende nach dem Einschieben bzw. nach dem vollständigen Einschieben in den Einschubringraum (6) mit ihrem bzw. seinem Stirnende (17) an einem Anschlagflansch (18) des Einschubendes (3) anliegt.

**8.** Kraftfahrzeugaggregat nach einem der Ansprüche 1 bis 7, wobei die Außenhülse (5) und der Haltedorn (4) einstückig miteinander verbunden sind.

**9.** Kraftfahrzeugaggregat nach einem der Ansprüche 1 bis 8, wobei zumindest ein Basisteil des Schnellverbinders (1) - insbesondere mit dem Einschubende (3) und dem Mittelabschnitt (7) und bevorzugt auch mit dem Anschlussabschnitt (8) - als ein einziges Kunststoffteil und insbesondere als ein einziges Spritzgussteil ausgebildet ist.

**10.** Kraftfahrzeugaggregat nach einem der Ansprüche 1 bis 9, wobei der Haltedorn (4) ein sich konisch verjüngendes Stirnende (19) als Aufschiebehilfe für die Rohrleitung (2) bzw. für das Rohrleitungsende aufweist.

**11.** Kraftfahrzeugaggregat nach einem der Ansprüche 1 bis 10, wobei der Haltedorn (4) mit seinem Stirnende (17) aus der Außenhülse (5) herausragt.

**12.** Verfahren zur Herstellung eines Kraftfahrzeugaggregates mit einem Schnellverbinder (1) und einer Kraftfahrzeugrohrleitung (2), insbesondere nach einem der Ansprüche 1 bis 11, wobei ein Basisteil des Schnellverbinders (1) mit einem Haltedorn (4) an einem Einschubende (3) und mit einer den Haltedorn (4) umgebenden Außenhülse (5) sowie einem in einem Einschubringraum (6) zwischen Haltedorn (4) und Außenhülse (5) angeordneten Gewinde (13) hergestellt wird und wobei ein Rohrleitungsende der Rohrleitung (2) in den Einschubringraum (6) eingeschoben bzw. eingeschraubt wird,
wobei der Schnellverbinder (1) mit einem mit einem Mittelabschnitt (7) verbundenen Anschlussabschnitt (8) hergestellt wird, **dadurch gekennzeichnet, dass** der Anschlussabschnitt (8) mit einer Steckelementaufnahmeöffnung (9) zur Aufnahme eines Steckelementes (10) ausgestattet wird, und
wobei die Steckelementaufnahmeöffnung (9) mit einem Rastvorsprung (11) bzw. Rastvorsprüngen (11) hergestellt wird, welcher Rastvorsprung (11) bzw. welche Rastvorsprünge (11) von zumindest einem Vorsprungelement (12) des Steckelements (10) hintergreifbar ist / sind.

**13.** Verfahren nach Anspruch 12, wobei das Basisteil mit einem Spritzgussverfahren hergestellt wird.
